# EUROPÄISCHE PATENTANMELDUNG

(11) **EP 1 344 706 A2**
(43) Veröffentlichungstag der Anmeldung: **17.09.2003**
(21) Anmeldenummer: 03004609.8
(22) Anmeldetag: 01.03.2003
(51) Int. Cl.: B62D 1/04

(54) **Elektrischer Schalter für ein Kraftfahrzeug**

(30) Priorität: 16.03.2002 DE 10211825
(71) Anmelder: ADAM OPEL AG, 65423 Rüsselsheim (DE)
(72) Erfinder: Friesen, Markus, 64521 Gross-Gerau (DE)

(57) **Zusammenfassung**

Ein elektrischer Schalter für ein Kraftfahrzeug, insbesondere Lenkradschalter, umfasst ein manuelles Betätigungselement (4) zur Ausführung mindestens eines Schaltvorgangs einer Baueinheit, die über ein Steuergerät (9, 10) mit dem Schalter (5) verbunden ist. Das Steuergerät (9, 10) ist mit einem Lenkwinkelsensor gekoppelt und in Abhängigkeit von mindestens einer Drehstellung eines Lenkrades (1) gibt das Steuergerät (9, 10) einen Schaltvorgang frei oder sperrt den Schaltvorgang.

## Beschreibung

Die Erfindung bezieht sich auf einen elektrischen Schalter für ein Kraftfahrzeug, insbesondere Lenkradschalter, mit einem manuellen Betätigungselement zur Ausführung mindestens eines Schaltvorgangs einer Baueinheit, die über ein Steuergerät mit dem Schalter verbunden ist.

Aus der DE 197 39 626 A1 sind an einem Lenkrad angeordnete elektrische Schalter bekannt, die jeweils in einer Ausnehmung einer Polsterung des Lenkrades angebracht sind. Zur Beaufschlagung eines Schaltelementes ist ein Betätigungselement jedes Schalters in die Ausnehmung eingesetzt. Mit diesen Schaltern lassen sich beispielsweise ein Radio zur Sender- und/oder Lautstärkeeinstellung, ein Informationsdisplay oder eine Fahrgeschwindigkeitsregelung des Kraftfahrzeuges ansteuern. Hierzu sind die Schalter mit entsprechenden Steuergeräten verbunden. Um eine Fehlbedienung der elektrischen Schalter, insbesondere während des Verdrehens des Lenkrades, zu verhindern, sind die Schalter relativ weit entfernt zu den den Lenkradkranz umfassenden Händen eines Bedieners im Lenkrad angeordnet. Diese Anordnung der Schalter ist jedoch nicht ergonomisch und verhindert überdies eine versehentliche Fehlbedienung beim Lenken, beispielsweise während einer Kurvenfahrt, nicht zuverlässig.

Im Weiteren ist es aus der Praxis bekannt, zur Erfassung von Drehwinkeländerungen einer Lenksäule und damit auch des Lenkrades einen mit einem Steuergerät gekoppelten Lenkwinkelsensor der Lenksäule zuzuordnen.

Es ist Aufgabe der Erfindung, einen elektrischen Schalter der eingangs genannten Art zu schaffen, bei dem eine Fehlbedienung in Abhängigkeit von bestimmten Fahrsituationen des Kraftfahrzeuges mit einfachen Mitteln ausgeschlossen ist.

Erfindungsgemäß wird die Aufgabe dadurch gelöst, dass das Steuergerät mit einem Lenkwinkelsensor gekoppelt ist und in Abhängigkeit von mindestens einer Drehstellung eines Lenkrades den Schaltvorgang freigibt oder sperrt.

Das Steuergerät wertet das Signal des Lenkwinkelsensors bezüglich der Drehwinkelstellung des Lenkrades aus. Bei einer Drehwinkelstellung, die einer Geradeausfahrt des Kraftfahrzeuges entspricht, gibt das Steuergerät die dem Schalter üblicherweise zugeordneten Schaltvorgänge frei. Nach der Freigabe lassen sich beispielsweise beliebige Einstellungen des Autoradios, der Klimaanlage oder der Fahrgeschwindigkeitsregelung durch die Beaufschlagung des Schalters vornehmen. Um z.B. bei einer Kurvenfahrt des Kraftfahrzeuges eine versehentliche Fehlbedienung des Schalters, die beispielsweise eine ungewollte Verstellung des Radios oder der Fahrgeschwindigkeitsregelung zur Folge hat, zuverlässig auszuschließen, sperrt das Steuergerät den durch die Betätigung des Schalters veranlassten Schaltvorgang. Damit ist es möglich, den Schalter relativ nahe zu der Hand des Bedieners, d.h. in unmittelbarer Nachbarschaft zu dem Lenkradkranz in den Lenkradspeichen anzuordnen, da die versehentliche Fehlbedienung des Schalters durch das Zusammenwirken des Steuergerätes mit dem Lenkwinkelsensor ausgeschlossen ist. Somit lässt sich auch eine ergonomische Anordnung des Schalters erzielen.

Alternativ wird die Aufgabe erfindungsgemäß dadurch gelöst, dass das Steuergerät mit einem Lenkwinkelsensor gekoppelt ist und in Abhängigkeit von der Drehbewegung des Lenkrades den Schaltvorgang freigibt oder sperrt.

Bevorzugt gibt das Steuergerät in Abhängigkeit von der Drehbewegung des Lenkrades den Schaltvorgang frei oder sperrt den Schaltvorgang. Somit erfolgt die Freigabe oder das Sperren des durch die Beaufschlagung des Schalters ausgelösten Schaltvorgangs in Abhängigkeit davon, ob das Lenkrad im Augenblick der Schalterbetätigung bewegt wird oder nicht. Bei einer im Wesentlichen statischen Drehstellung des Lenkrades, z.B. bei Durchfahrt einer lang gezogenen Kurve gibt das Steuergerät alle Schaltvorgänge frei. Hierbei kann das Steuergerät auch die Geschwindigkeit, mit der das Lenkrad verdreht wird, aufgrund der zeitlichen Signalfolge des Lenkwinkelsensors berücksichtigen. Beim Verdrehen des Lenkrades gibt das Steuergerät beispielsweise einen Schaltvorgang, der bei einer eingeschalteten Fahrgeschwindigkeitsregelung eine Reduzierung der Geschwindigkeit oder eine Abschaltung der Fahrgeschwindigkeitsregelung zur Folge hat, frei, während es einen Schaltvorgang, der eine Erhöhung der Geschwindigkeit des Kraftfahrzeuges bewirkt, sperrt. Die Parameter, nach denen das Steuergerät arbeitet, sind bei der Fahrzeugherstellung frei programmierbar.

Nach einer vorteilhaften Weiterbildung des Erfindungsgedankens ordnet das Steuergerät bei mehreren zeitlich kurz aufeinander folgenden unterschiedlichen Drehstellungen oder Drehbewegungen des Lenkrades dem Schalter eine alternative Schaltfunktion zu. Z. B. wird dem Schalter, der normalerweise zur Einstellung von Radiofunktionen dient, die Schaltfunktion zur Auslösung einer Hupe zugeordnet. Diese Maßnahme ist besonders vorteilhaft, wenn mehrere Schalter in ein Lenkrad integriert sind und das Steuergerät bzw. die Steuergeräte allen Schaltern beispielsweise eine sicherheitsrelevante Schaltfunktion zuordnet, da der Benutzer dann nicht nach einem bestimmten Schalter für diese Schaltfunktion suchen muss, sondern einen beliebigen Schalter beaufschlagen kann.

Vorteilhafterweise ordnet das Steuergerät jeder Drehstellung einen Toleranzbereich zu, in dem es einen bestimmten Schaltvorgang freigibt. Somit erfolgt das Sperren eines Schaltvorganges nicht bereits bei einer relativ kleinen Änderung der Drehstellung, sondern nur dann, wenn die geänderte Drehstellung außerhalb des vorgegeben Toleranzbereichs liegt. Somit sind kleinere Korrekturen der Fahrtrichtung unter Beibehaltung der Schaltfunktion sichergestellt.

Zweckmäßigerweise sind das Steuergerät, der Schalter und der Lenkwinkelsensor über ein Bus-System des Kraftfahrzeuges miteinander verbunden. Das Bus-System gewährleistet die Kommunikation aller relevanten Baugruppen.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im Folgenden anhand eines Ausführungsbeispieles unter Bezugnahme auf die zugehörigen Zeichnungen näher erläutert. Es zeigen:

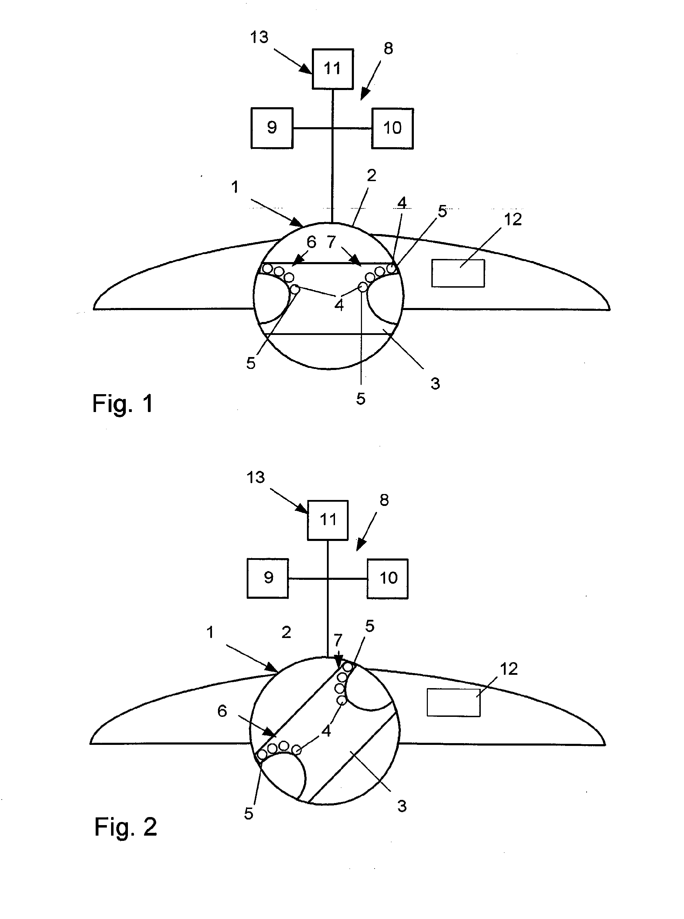

- Fig. 1: eine schematische Darstellung mehrerer erfindungsgemäßer Schalter und zwar jeweils als Lenkradschalter in einer ersten Drehstellung eines Lenkrades und
- Fig. 2: eine schematische Darstellung der Schalter nach Fig. 1 in einer zweiten Drehstellung des Lenkrades.

Ein Lenkrad 1 für ein Kraftfahrzeug umfasst einen Lenkradkranz 2, von dem sich Speichen 3 in das Zentrum des Lenkrades erstrecken. Zwischen den Speichen 3 sind mehrere mit Betätigungselementen 4 versehene Schalter 5 als so genannte Lenkradschalter in zwei Gruppen 6, 7 angeordnet, die über ein Bus-System 8 mit zugeordneten Steuergeräten 9, 10 in Verbindung stehen. Die Steuergeräte 9, 10 kommunizieren über das Bus-System 8 mit einem Lenkwinkelsensor, der unterhalb des Lenkrades 1 einer Lenksäule zur Erfassung von Drehwinkeländerungen zugeordnet ist. Die erste Gruppe 6 der Schalter 5 dient zur Ansteuerung eines Informationssystems des Kraftfahrzeuges, wobei durch eine Beaufschlagung von den Schaltern 5 zugehörigen Betätigungselementen 4 unterschiedliche Informationen eines Bordcomputers 11, der eine Baueinheit 13 bildet auf einer Anzeigevorrichtung 12 dargestellt werden. Mit der zweiten Gruppe 7 von Schaltern 5 werden Einstellungen einer Fahrgeschwindigkeitsregelung (Tempomat) vorgenommen.

Bei einer Geradeausfahrt des Kraftfahrzeuges nimmt das Lenkrad 1 eine bestimmte Drehstellung ein, die von dem Lenkwinkelsensor erfasst und durch die Steuergeräte 9, 10 ausgewertet wird. In dieser Drehstellung des Lenkrades 1 sind sämtliche den Schaltern 5 zugeordneten Schaltfunktionen durch die Steuergeräte 9, 10 freigegeben. Der Bordcomputer 11 ist zur Informationsdarstellung auf der Anzeigeeinrichtung 12 im Rahmen der vorgegebenen Auswahlmenüs beliebig ansteuerbar und die Fahrgeschwindigkeitsregelung lässt sich sowohl ein- als auch ausschalten und bei eingeschalteter Fahrgeschwindigkeitsregelung kann die Geschwindigkeit des Kraftfahrzeuges durch eine Beaufschlagung der entsprechenden Schalter 5 erhöht oder verlangsamt werden. Wird das Lenkrad 1 verdreht, besteht die Gefahr einer Fehlbedienung der Schalter 5 durch eine versehentliche Beaufschlagung der Betätigungselemente 4 der Schalter 5 beim Hantieren an dem Lenkrad. Um eine solche Fehlbedienung zu verhindern, werten die Steuergeräte 9, 10 die Signale des Lenkwinkelsensors aus, registrieren eine Verdrehung des Lenkrades 1 in eine Drehstellung, die einer Kurvenfahrt des Kraftfahrzeuges entspricht, und sperren den Schaltern 5 zugeordnete Schaltvorgänge. Sonach ist beispielsweise eine Geschwindigkeitserhöhung durch eine versehentliche Beaufschlagung des entsprechenden Schalters 5 verhindert. Dagegen ist ein Schaltvorgang zum Ausschalten der Fahrgeschwindigkeitsregelung auch während einer Kurvenfahrt des Kraftfahrzeuges freigegeben.

### Bezugszeichenliste

- 1.: Lenkrad
- 2.: Lenkradkranz
- 3.: Speiche
- 4.: Betätigungselement
- 5.: Schalter
- 6.: Gruppe
- 7.: Gruppe
- 8.: Bus-System
- 9.: Steuergerät
- 10.: Steuergerät
- 11.: Bordcomputer
- 12.: Anzeigevorrichtung
- 13.: Baueinheit

## Patentansprüche

1. Elektrischer Schalter für ein Kraftfahrzeug, insbesondere Lenkradschalter, mit einem manuellen Betätigungselement (4) zur Ausführung mindestens eines Schaltvorgangs einer Baueinheit, die über ein Steuergerät (9, 10) mit dem Schalter (5) verbunden ist, **dadurch gekennzeichnet, dass** das Steuergerät (9, 10) mit einem Lenkwinkelsensor gekoppelt ist und in Abhängigkeit von mindestens einer Drehstellung eines Lenkrades (1) den Schaltvorgang freigibt oder sperrt.

2. Elektrischer Schalter nach dem Oberbegriff des Anspruchs 1, **dadurch gekennzeichnet, dass** das Steuergerät (9, 10) mit einem Lenkwinkelsensor gekoppelt ist und in Abhängigkeit von der Drehbewegung des Lenkrades (1) den Schaltvorgang freigibt oder sperrt.

3. Elektrischer Schalter nach Anspruch 1 oder 2, **dadurch gekennzeichnet, dass** das Steuergerät (9, 10) bei mehreren zeitlich kurz aufeinanderfolgenden unterschiedlichen Drehstellungen oder Drehbewegungen des Lenkrades (1) dem Schalter (5) eine alternative Schaltfunktion zuordnet.

4. Elektrischer Schalter nach einem der Ansprüche 1 bis 3, **dadurch gekennzeichnet, dass** das Steuergerät (9, 10) jeder Drehstellung einen Toleranzbereich zuordnet, in dem es einen bestimmten Schaltvorgang freigibt.

5. Elektrischer Schalter nach einem der Ansprüche 1 bis 3, **dadurch gekennzeichnet, dass** das Steuergerät (9, 10), der Schalter (5) und der Lenkwinkelsensor über ein Bus-System (8) des Kraftfahrzeuges miteinander verbunden sind.
